# EUROPÄISCHE PATENTSCHRIFT

(11) **EP 1 144 493 B1**
(45) Veröffentlichungstag und Bekanntmachung des Hinweises auf die Patenterteilung: **23.10.2002**
(21) Anmeldenummer: 00945529.6
(22) Anmeldetag: 17.05.2000
(51) Int. Cl.: C08J 11/00

(54) **VERFAHREN ZUR HERSTELLUNG EINER DEN THERMOPLASTISCHEN ELASTOMEREN ÄHNLICHEN ELASTOMERLEGIERUNG UNTER VERWENDUNG VON ALT- ODER ABFALLGUMMI**
METHOD OF PRODUCING AN ELASTOMER BLEND THAT IS SIMILAR TO THERMOPLASTIC ELASTOMERS, ON THE BASIS OF RECLAIMED RUBBER OR WASTE RUBBER
PROCEDE DE PRODUCTION D'UN MELANGE D'ELASTOMERES SEMBLABLE A DES ELASTOMERES THERMOPLASTIQUES AU MOYEN DE CAOUTCHOUC REGENERE OU DE DECHETS DE CAOUTCHOUC

(30) Priorität: 25.05.1999 DE 19923758
(43) Veröffentlichungstag der Anmeldung: 17.10.2001
(73) Patentinhaber: Michael, Hannes, 09119 Chemnitz (DE); Scholz, Henrik, 01129 Dresden (DE)
(72) Erfinder: Michael, Hannes, 09119 Chemnitz (DE); Scholz, Henrik, 01129 Dresden (DE)
(74) Vertreter: Hofmann, Klaus
(86) Internationale Anmeldenummer: DE0001539
(87) Internationale Veröffentlichungsnummer: WO00078852

(56) Entgegenhaltungen:
- DE-A- 19 607 281
- MENNIG G ET AL: "THERMOPLASTIC ELASTOMERS FROM BLENDS OF POLYPROPYLENE AND POWDERED RUBBER WASTE" INTERNATIONAL POLYMER SCIENCE AND TECHNOLOGY,GB,RAPRA TECHNOLOGIES, SHROPSHIRE, Bd. 24, Nr. 11, 1997, Seiten T100-T103, XP000741364 ISSN: 0307-174X

## Beschreibung

Die Erfindung betrifft ein Verfahren zur Herstellung einer den Thermoplastischen Elastomeren ähnlichen Elastomerlegierung unter Verwendung von Alt- oder Abfallgummi, bei dem der zu einem Gummimehl verarbeitete Alt- und Abfallgummi mit einem Thermoplast und wenigstens einem Stabilisierungsmittel in unterschiedlichen Masseverhältnissen im Prozeß des Schmelzemischens in einem Mischaggregat zu Compounds verarbeitet wird.

Als Beitrag zur Lösung des Problems der werkstofflichen Verwertung von Alt- und Abfallgummi wird vielerorts an der Entwicklung von Verfahren und Rezepturen zur Verwendung von Gummimehl und Gummigranulat aus Alt- oder Abfallgummi gearbeitet. Solches Gummimehl bzw. Gummigranulat wird in zunehmendem Maße auf dem europäischen Markt angeboten. Forschungsarbeiten beschäftigen sich mit der Herstellung, Verarbeitung und Prüfung von Thermoplastischen Elastomeren (TPE) ähnlichen Compounds aus Gummimehl und Kunststoffen.

Bekannt ist die Herstellung derartiger Elastomerlegierungen mit Hilfe des Schmelzemischens mit dynamischer Stabilisation des Gemisches in einem Innenmischer. Das mechanisch-physikalische Eigenschaftsbild dieser Compounds wird durch plastisches Deformationsverhalten der meist teilkristallinen Kunststoffmatrix und dem entropieelastischen, also gummitypischen Deformationsverhalten der darin dispers verteilten elastomeren Domänen bestimmt.

So offenbart beispielsweise die DE 295 15 721 U1 das Einmischen von Gummimehl in Polypropylen. Die Druckschrift beschreibt eine Gummimahlgut modifizierte Thermoplaste, vorzugsweise Polypropylen, Styrol-Butadien-Styrol oder Styrol-Ethylen-Butylen-Styrol als Ersatz oder Verschnitt von Thermoplastischen Elastomeren beziehungsweise schlagzäh modifizierten Thermoplasten, die dadurch gekennzeichnet ist, daß feingemahlenes Gummi mit einer Korngröße <600 µm in die Matrix des Thermoplasten mit 10 bis 80 Gewichtsprozent physikalisch eingebunden ist. Die zuzsätzliche chemische Einbindung erfolgt dabei mittels peroxidische Vernetzung oder Säurefunktionalisierung.

Sowohl die dort angewandte Verfahrenstechnologie als auch die Rezepturzusammenstellung reicht jedoch in keinem Maße dafür aus, um ähnliche oder vergleichbare Werteniveaus der mechanisch-physikalischen Werkstoffkennwerte zu erzeugen, wie sie für bekannte Elastomerlegierungen typisch sind.

Während in DE 295 15 721 U1 der Einsatz von Antioxidantien zum Schutz vor Licht und Wärme eingesetzt wird, erlangen Antioxidantien in weiteren bekannten Verfahren zur deutlichen Steigerung von Festigkeits- und Härtewerten durch eine Donator-Akzeptor-Reaktion eine hohe Bedeutung.

So werden in der DE 196 07 281 A1 Verfahren und Rezepturen benannt, nachdem sich Elastomer-Compounds herstellen lassen, die sich durch ein zum bekannten technischen Stand bemerkenswert verbessertes, insbesondere mechanisch-physikalisches Werkstoffkennwerteniveau auszeichnen. Danach beruht das Verfahren darauf, daß das Gemisch aus mindestens zwei an sich unverträglichen Mischungsbestandteilen, Gummimehl und Thermoplast, durch Schaffung entsprechender stofflicher, technologischer und konstruktiver Voraussetzungen während des Schmelzemischprozesses in ein Compound mit schlagzähen Eigenschaften überführt wird. Dazu wird unbehandeltes und/oder aktiviertes Alt- oder Abfallgummimehl und eine Thermoplastkomonente einem Innenmischer zugeführt, die Thermoplastkomponente wird plastiziert, während gleichzeitig das Gummimehl verteilt bzw. untergemischt wird. Durch Zusatz eines oder mehrerer Vernetzungsmitteln in unterschiedlichen Masseverhältnissen unter Einwirkung hoher Scherkräfte erfolgt die dynamische Stabilisierung der Elastomer- und/oder der Thermoplastkomponente und die Verarbeitung zu Compounds mit den Thermoplastischen Elastomeren ähnlichen Eigenschaften.

Nachteilig an dieser Lösung ist, daß eine homogene Verteilung des Vernetzungsmittels nicht gewährleistet und dadurch eine stabile Reproduzierbarkeit qualitativ gleichwertiger Compounds über einen langen Zeitraum hinweg nicht gegeben ist.

Es hat sich außerdem gezeigt, daß nicht jedes thermoplastische Material gleichermaßen gut geeignet ist, qualitativ hochwertige und mehrfach recycelbare Compounds herzustellen, da der erreichbare Vernetzungsgrad der thermodynamisch unverträglichen Komponenten sehr unterschiedlich ist.

Es ist deshalb Aufgabe der Erfindung, bekannte Verfahren zum werkstofflichen Recycling von Alt- und Abfallgummi durch dynamische Stabilisation von Gummimehl, Thermoplast und Vernetzungsmitteln nach der eingangs beschriebenen Art so zu verbessern, daß ein Gemisch aus zwei an sich unverträglichen Phasen, Gummimehl und Thermoplast, durch geeignete Materialwahl für die Thermoplastkomponente und weitere Zusatzstoffe und durch eine verbesserte Technologie des Verfahrensablaufes während einer relativ kurzen Mischzeit im Schmelzemischprozeß in eine Legierung mit den Thermoplastischen Elastomeren ähnlichen Eigenschaften überführt wird, die in ihrer Qualität gleichbleibend, reproduzierbar und mehrfach recycelbar ist. Insbesondere sollen die Compounds gummitypische Werkstoffeigenschaften mit gleichbleiben guter Qualität aufweisen.

Die Aufgabe wird erfindungsgemäß dadurch gelöst, daß zunächst wenigstens ein Polypropylen-Co-Polymerisat oder ein Gemisch dessen mit wenigstens einem Polypropylen-Typen im Mischaggregat aufgeschmolzen und danach der Schmelze dosiert Gummimehl, von dem zumindest ein Teil in einem Radikaldonator vorgequollen worden ist, zugegeben wird, daß das Gummimehl durch Aufbringen hoher Scherdeformationen und unter mischparameterabhängigem Zusatz radikalbildender Agenzien zur Phasenkopplung zwischen dem Gummimehl und dem Polypropylen-Co-Polymerisat oder dessen Gemisches in der Kunststoffmatrix dispergiert wird und daß der dynamische Stabilisierungsprozeß bei einer Mischguttemperatur, die oberhalb des Schmelztemperaturbereiches des Polypropylen-Co-Polymerisats oder dessen Gemisches, jedoch unterhalb des Zersetzungstemperaturbereiches des Gummimehls liegt und bei einer Mischzeit, die eine Reaktion des Radikalbildners ermöglicht, erfolgt.

Diese mit dem erfindungsgemäßen Verfahren herstellbaren Elastomerlegierungen vereinen die Vorzüge einer thermoplastischen Verarbeitbarkeit mit gummitypischen Werkstoffmerkmalen. Diese sogenannten Elastomeric Alloys sind den Thermoplastischen Elastomeren sehr ähnlich. Als Kunststoffphase fungiert ein Polypropylen-Co-Polymer mit Polyethylen-Anteil bzw. ein Gemisch aus teilkristallinen Polypropylenen (Homo- und Co-Polymerisat). Da sich das Verfahren auf die werkstoffliche Verwertung von Alt- und Abfallgummi konzentriert, wird der Rezepturentwicklung ein Mischungsverhältnis von Gummimehl zu Kunststoff von wenigstens 50 % Gummimehl zugrunde gelegt. Die Elastomeric Alloys lassen sich in ihrem mechanisch-physikalischen Eigenschaftsprofil reproduzierbar herstellen und zeichnen sich durch eine untereinander korrelierbare Kennwertestruktur aus.

Die Elastomerlegierungen sind recycelfähig, das heißt, sie lassen sich im Gegensatz zu Gummi ohne nennenswerten Eigenschaftsverlust ein zweites oder mehrfaches Mal verarbeiten.

Die Besonderheit des Verfahrensablaufes besteht in der Herbeiführung und Nutzung der Effekte der sogenannten dynamischen Stabilisation des Polymergemisches. Nur bei einer Kombination von mechanischem Energieeintrag und chemischer Reaktion nach erfolgter Vorquellung der dispersen Phase kann eine qualitativ hochwertige Anbindung beider Phasen erreicht werden. Der Polyethylen-Anteil wandert an die Phasengrenze und zeigt dort Vernetzungs- und Coaleszenzeffekte. So können hohe Anteile zum Beispiel von Altreifenmehlen mit grobkörnigerer Struktur (Korngröße wenigstens 0,5 mm) eingesetzt und zu Compounds mit sehr guten mechanisch-physikalischen Eigenschaften verarbeitet werden. Das Vorquellen des Gummimehles dient dabei dazu, den Angriff des Radikaldonators auf die Phasengrenzflächen zu begrenzen.

Die Mischung aus Gummimehl, einem speziell ausgewähltem Kunststoff und dem Stabilisierungsmittel bzw. der Additive in einem zum Aufbringen hoher Scherdeformationen geeigneten Mischaggregat, hier dem Innenmischer, wird auf ein Energieniveau gehoben, bei dem die Thermoplastkomponente aufgeschmolzen und die Elastomerkomponente in ihr dispergiert wird. Das erreichbare Eigenschaftsspektrum dieser Compounds läßt sich als Funktion der Rezeptur, das heißt des Masseverhältnisses von Gummimehl zu Kunststoff und weiterer Additive sowie der Mischtechnologie in weiten Grenzen variieren und auf den jeweiligen Anwendungsfall der Polymerlegierung zuschneiden.

Die Compounds sind als Formmassen insbesondere für technische Formteile einsetzbar. Sie können auf Grund ihrer guten mechanisch-physikalischen Eigenschaften, besonders hinsichtlich der Zugfestigkeit und der Reißdehnung sowie ihres Widerstandes gegenüber Schlag- und Stoßbelastungen auch bei tiefen Temperaturen, für hochbeanspruchte technische Formartikel verwendet werden und damit herkömmliche Thermoplastische Elastomere aus reinem Kunststoff mit vernetzter oder unvernetzter reiner Kautschukphase kostengünstig und umweltfreundlich ersetzen.

Typische Anwendungsbeispiele sind Halbzeuge oder Formteile wie Manschetten und Dichtungen sowie Stoßfänger und Verkleidungen im Kraft- und Schienenfahrzeugbau. Auch Behälter, Kübel oder Abdeckungen im Straßen- und Rohrleitungsbau, hergestellt durch Spritzgießen, Extrusion, Walzen, Kalandrieren oder Pressen können kostengünstig aus diesen Compounds gefertigt werden.

Nach einer vorteilhaften Weiterbildung des erfindungsgemäßen Verfahrens wird dem Aufschmelzprozeß des Polypropylen-Co-Polymerisats wenigstens ein Anteil mindestens eines Polypropylen-Homo-Polymerisats beigefügt.

Damit können Härte und Festigkeit, insbesondere auch die Abriebfestigkeit des stabilisierten Systems weiter erhöht werden.

Erfindungsgemäß ist des weiteren vorgesehen, daß als Thermoplast ein Polypropylenverschnitt in einem Gemisch aus Co- und Homo-Polymerisat und mit einem Co-Polymeranteil von bis zu 95 % der Gesamtkunststoffmatrix eingesetzt wird.

Auch hierdurch können die mechanisch-physikalischen Eigenschaften, hier Schlagfestigkeit bei Einsatz in niedrigen temperaturbereichen und Reißdehnung bei Normaltemperatur erhöht werden. Die Compounds besitzen eine wesentlich bessere Fließfähigkeit, was die Verarbeitungsbedingungen besonders durch Spriztzgießen und Extrusion erleichtert.

Wenn als Radikaldonator ein flüssiges Peroxid mit hohem Aktivsauerstoffanteil und mit einem auf den Polymeranteil bezogenen Gewichtsverhältnis von > 0,3 % eingesetzt wird, so führt dies zu einer qualitativ besseren Vernetzung der Gemischkomponenten.

Der hohe Aktivsauerstoffanteil trägt zu einer sehr aktiven Reaktion bei. Die wirksame Oberfläche der dispersen elastomeren Phase wird durch Quellung vergrößert und die Radikalbildung an der Gummimehloberfläche über die partielle Aufhebung von Vernetzungsbrücken bzw. Spaltung von noch vorhandenen Doppelbindungen des Kautschuks bewirkt. Der im Co-Polymerisat vorhandene Polyethylen-Anteil wird durch das Peroxid vernetzt. Der Pfropfungsgrad ist dabei eine Funktion der Reaktivität des Peroxides.

Bezüglich der erreichbaren mechanisch-physikalischen Eigenschaften von Vorteil ist auch, wenn die Matrix ausschließlich ein Polypropylen-Co-Polyethylen ist.

Die Grenzflächenspannungen der zu vermischenden Materialien sollten in der Regel möglichst übereinstimmen. Polyethylen weist gegenüber Polypropylen eine wesentlich geringere Oberflächenspannung auf und liegt weit mehr im Bereich der Grenzflächenspannung von Naturkautschuk als Bestandteil des Gummimehls. Von daher ist es besser geeignet, sich mit dem Gummimehl zu verbinden.

Nach einer weiteren vorzugsweisen Ausgestaltung des erfindungsgemäßen Verfahrens werden zur Erhöhung der Härte und Festigkeit der Compounds Radikalakzeptoren zu einem von der Halbwertszeit des Radikaldonators abhängigen Zeitpunkt zugegeben.

Dadurch werden besonders Härte und Festigkeit des Compounds vergrößert. Der Matrixabbau wird gestoppt und eine ungewollte Zerstörung der Matrix wird verhindert.

Wenn als Radikalakzeptoren Schwefel, schwefelhaltige oder schwefelspendende Stoffe und/oder andere polyfunktionelle Verbindungen wie Chinone oder Chinoline vor und/oder während des Schmelzemischprozesses zugegeben werden, so dient dies ebenfalls der weiteren Verbesserung oder Stabilisierung der mechanisch-physikalischen Eigenschaften des Compounds. Der unkontrollierte Abbau von Polypropylen wird nachhaltig verhindert.

Erfindungsgemäß ist auch vorgesehen, daß vor der Zugabe des Radikaldonator-Akzeptor-Systems die Zugabe von insbesondere auf das Gummimehl regenerierend wirkenden Substanzen erfolgt.

Die regenerierend wirkenden Substanzen können Merkaptobenzothiazol (MBT) oder Pentachorthiophenol beziehungsweise Dibenzoylamidodiphenyldisulfit sein.

Durch diese zusätzliche Aktivierung des Gummimehles infolge Spaltung der Kohlenstoffketten wird die Zahl der bindungsaktiven Stellen des Gummimehles erhöht.

Ein zusätzlicher Stabilisierungselffekt wird dadurch erreicht, daß das Gummimehl in verschiedenen Korngrößen, unbehandelt oder mit mechanischen und/oder chemischen und/oder chemischphysikalischen Methoden aktiviert als Gummiphase und Rezepturkomponente eingesetzt wird.

Mit Einsatz grobkörnigeren Gummimehls wird der technologische Herstellungsaufwand des Gummimehls minimiert, das Gummimehl ist kostengünstiger einsetzbar. Der Verfahrensablauf ermöglicht, daß die guten mechanisch-physikalischen Eigenschaften dennoch erzielt werden.

Dabei ist vorgesehen, Gummimehl mit einer Korngröße im Bereich bis 1 mm vorteilhaft und bei gleicbleibend guten Eigenschaften einzusetzen.

Wenn vor oder während des Schmelzemischprozesses weitere Additive wie Füllstoffe, Weichmacher, Harze, Frischkautschuk und Kautschukmischungen, Farbstoffe beziehungsweise Pigmente sowie Compatibilizer eingesetzt werden, so dient diese Maßnahme der Verwirklichung spezieller Kundenwünsche, angepaßt an die jeweiligen konkreten Einsatzbedingungen.

Insbesondere aus Gründen des Umweltschutzes von Vorteil ist, daß das Polypropylen oder das Co-Polymerisat aus Polypropylen und Polyethylen sowohl als reiner Primär-, oder Sekundärkunststoff als auch in Mischungen mit anderen Thermoplasten oder Mischfraktionen einsetzbar ist.

Die Recycelfähigkeit der Compounds wird nahezu ohne Weteverlust beibehalten, die Compounds sind über lange Zeit wiederverwendungsfähig und belasten damit die Umwelt nicht.

Das erfindungsgemäße Verfahren soll nachfolgend noch näher erläutert werden.

Zunächst wird, um den Radikaldonator in seiner Wirkung zu unterstützen, eine bestimmte Menge Gummimehl durch diesen, vorzugsweise in flüssiger Form vorliegend, vorgequollen. Diese effiziente spezielle Wirkpaarung schafft die Voraussetzung zur in situ-Block-Copolymerbildung und Stabilisierung durch Covernetzung der beiden Phasen Gummimehl und Kunststoff. Der dazu nötige spezielle Mischprozeß wird im Innenmischer realisiert. Dabei laufen physikalische, das heißt Verteilungsprozesse, und chemische, das heißt Stabilisierungsprozesse, zeitlich parallel zueinander ab. Im Ergebnis entsteht die Struktur der Compounds, die durch eine disperse Verteilung von Gummidomänen in einer Thermoplastmatrix gekennzeichnet ist.

Der Mischprozeß ist von einer speziellen Charakteristik der wichtigsten Prozeßgrößen Antriebsleistung und Mischguttemperatur gekennzeichnet. Auf der Deutung des typischen Verlaufes dieser Prozeßgrößen über der Mischzeit beruht auch die Verfahrensbezeichnung als dynamische Stabilisation.

Nach einer ersten Leistungsspitze, die nach Zugabe der Hauptkomponenten Gummimehl und Thermoplast und nach dem Stempelschließen des Innenmischers auftritt, erfolgt die Zugabe weiterer Stabilisationschemikalien oder Additive. Nach erneutem Stempelschließen ist wieder ein Leistungs- bzw. Temperaturanstieg zu beobachten. Dieses zweite Leistungsmaximum beruht darauf, daß in der Mischung aus Gummimehl und Kunststoff eine chemische Reaktion, das heißt ein Phasenkopplungs- oder Stabilisierungsprozeß, stattgefunden hat. Sofort danach und innerhalb eines genau definierten Temperaturbereiches erfolgt der Prozeßabbruch und das Compound wird ausgestoßen. Eine Fortsetzung des Mischprozesses kann zu einer besseren Uniformität der Elastomeric Alloys führen.

Mit der Anwendung des Verfahrens der dynamischen Stabilisation gelingt es, an sich unverträgliche Phasen, in diesem Fall Gummimehl und Kunststoff, im Compound so zu stabilisieren, daß es im folgenden Verarbeitungsprozeß und beim Abkühlen, z. B. während des Spritzgießens oder Extrudierens, nicht wieder zu Entmischungserscheinungen kommt und sich das Elastomeric Alloy durch spezifische mechanisch-physikalische Eigenschaften auszeichnet.

Das erfindungsgemäße Verfahren kann qualitativ durch den Einsatz verschiedener Stabilisierungssysteme, Weichmacher, verstärkender Füllstoffe und anderer Additive erweitert werden. Durch Verwendung spezieller Kompatibilisatoren wird der unvermeidliche Modulsprung an den Phasengrenzen der beiden Hauptkomponenten der Polymerlegierung, Gummimehl und spezieller Kunststoff zusätzlich vermindert.

Nach konventioneller Spritzgießtechnologie hergestellte Prüfkörper zeigen neben guter thermoplastischer Verarbeitbarkeit ein spezielles, dem Gummi nahekommendes. Eigenschaftsprofil. Mit erfindungsgemäß hergestellten Compunds, aus denen mittels Spritzgießens Probekörper in Form von Zugstäben gefertigt worden sind, konnten bei Einsatz von Gummimehlen mit einer Korngröße von ca. 0,5 mm Reißdehnungen > 250 % und Zugfestigkeiten > 15 MPa erzielt werden. Der ermittelte Zugverformungsrest weist diese Werkstoffe in Anlehnung an die DIN 7724 mit Zugverformungsresten < 50 % als ein thermoplastisches Elastomer (TPE) aus. Bei einfachem Vermischen von Gummimehl und Polypropylen sind nur Zugfestigkeiten < 13 MPa und Reißdehnungen < 60 % erreichbar.

Vergleiche mit auf dem Markt befindlichen und als Thermoplastische Elastomere ausgewiesene Werkstoffe zeigen, daß mittels stabilisierter Compounds annähernd gleiche Werkstoffkennwerte erreichbar sind. Sie sind daher vorteilhaft insbesondere zur Herstellung von technischen Formteilen im Kraftfahrzeugwesen, der Bau- oder Landwirtschaft einsetzbar sind.

## Patentansprüche

1. Verfahren zur Herstellung einer den Thermoplastischen Elastomeren ähnlichen Elastomerlegierung unter Verwendung von Alt- und Abfallgummi, bei dem der zu einem Gummimehl verarbeitete Alt- und Abfallgummi mit einem Thermoplast und wenigstens einem Stabilisierungsmittel in unterschiedlichen Masseverhältnissen im Prozeß des Schmelzemischens in einem Mischaggregat zu Compounds verarbeitet wird, **dadurch gekennzeichnet, daß** zunächst wenigstens ein Polypropylen-Co-Polymerisat oder ein Gemisch dessen mit wenigstens einem Polypropylen-Typen im Mischaggregat aufgeschmolzen und danach der Schmelze dosiert Gummimehl, von dem zumindest ein Teil in einem Radikaldonator vorgequollen worden ist, zugegeben wird,
daß das Gummimehl durch Aufbringen hoher Scherdeformationen und unter mischparameterabhängigem Zusatz radikalbildender Agenzien zur Phasenkopplung zwischen dem Gummimehl und dem Polypropylen-Co-Polymerisat oder dessen Gemisches in der Kunststoffmatrix dispergiert wird und
daß der dynamische Stabilisierungsprozeß bei einer Mischguttemperatur, die oberhalb des Schmelztemperaturbereiches des Polypropylen-Co-Polymerisats oder dessen Gemisches, jedoch unterhalb des Zersetzungstemperaturbereiches des Gummimehls liegt, und bei einer Mischzeit, die eine Reaktion des Radikalbildners ermöglicht, erfolgt.

2. Verfahren nach Anspruch 1, **dadurch gekennzeichnet, daß** dem Aufschmelzprozeß des Polypropylen-Co-Polymerisats wenigstens ein Anteil mindestens eines Polypropylen-Homo-Polymerisats beigefügt wird.

3. Verfahren nach Anspruch 2, **dadurch gekennzeichnet, daß** der Thermoplast als Polypropylenverschnitt eingesetzt wird, in einem Gemisch aus Co- und Homo-Polymerisat und mit einem Co-Polymeranteil von 1 bis 95 % der Gesamtkunststoffmatrix.

4. Verfahren nach Anspruch 1 und 2 oder 3, **dadurch gekennzeichnet, daß** als Radikaldonator ein flüssiges Peroxid mit hohem Aktivsauerstoffanteil und mit einem auf den Polymeranteil bezogenen Gewichtsverhältnis von > 0,3 % eingesetzt wird.

5. Verfahren nach Anspruch 1 und einem der Ansprüche 2 bis 4, **dadurch gekennzeichnet, daß** als Co-Polymerbestandteil Polyethylen verwendet wird.

6. Verfahren nach Anspruch 1 und einem der Ansprüche 2 bis 5, **dadurch gekennzeichnet, daß** zur Erhöhung der Härte und Festigkeit der Compounds Radikalakzeptoren zu einem von der Halbwertszeit des Radikaldonators abhängigen Zeitpunkt zugegeben werden.

7. Verfahren nach Anspruch 6, **dadurch gekennzeichnet, daß** als Radikalakzeptoren Schwefel, schwefelhaltige oder schwefelspendende Stoffe und/oder andere polyfunktionelle Verbindungen wie Chinone oder Chinoline vor und/oder während des Schmelzemischprozesses zugegeben werden.

8. Verfahren nach Anspruch 1 und einem der Ansprüche 2 bis 7, **dadurch gekennzeichnet, daß** vor der Zugabe des Radikaldonator-Akzeptor-Systems die Zugabe von insbesondere auf das Gummimehl regenerierend wirkenden Substanzen erfolgt.

9. Verfahren nach Anspruch 8, **dadurch gekennzeichnet, daß** als regenerierend wirkende Substanzen Merkaptobenzothiazol (MBT) oder Pentachorthiophenol beziehungsweise Dibenzoylamidodiphenyldisulfit eingesetzt werden.

10. Verfahren nach Anspruch 1 und einem der Ansprüche 2 bis 9, **dadurch gekennzeichnet, daß** das Gummimehl in verschiedenen Korngrößen, unbehandelt oder mit mechanischen und/oder chemischen und/oder chemisch-physikalischen Methoden aktiviert als Gummiphase und Rezepturkomponente eingesetzt wird.

11. Verfahren nach Anspruch 10, **dadurch gekennzeichnet, daß** das Gummimehl eine Korngröße im Bereich bis 1 mm aufweist.

12. Verfahren nach Anspruch 1 und einem der Ansprüche 2 bis 11, **dadurch gekennzeichnet, daß** vor oder während des Schmelzemischprozesses weitere Additive wie Füllstoffe, Weichmacher, Harze, Frischkautschuk und Kautschukmischungen sowie Compatibilizer eingesetzt werden.

13. Verfahren nach Anspruch 1 und einem der Ansprüche 2 bis 12, **dadurch gekennzeichnet, daß** das Polypropylen oder das Co-Polymerisat aus Polypropylen und Polyethylen sowohl als reiner Primär-, oder Sekundärkunststoff als auch in Mischungen mit anderen Thermoplasten oder Mischfraktionen einsetzbar ist.

## Claims

1. A method of producing an elastomeric alloy that is similar to thermoplastic elastomers using reclaimed rubber or waste rubber, in which the reclaimed rubber and waste rubber which has been converted into powdered rubber is processed with a thermoplastic and at least one stabilizer in various mass ratios by melt-mixing in a mixer to give compounds, **characterized in that** at least one polypropylene copolymer or a mixture thereof with at least one polypropylene grade is firstly melted in a mixer and powdered rubber of which at least part has been preswelled in a free-radical donor is metered into the melt,
**in that** the powdered rubber is dispersed in the polymer matrix by application of high shear deformations and with mixing-parameter-dependent addition of free-radical-forming agents for phase coupling between the powdered rubber and the polypropylene copolymer or mixture thereof and
**in that** the dynamic stabilization process is carried out at a mix temperature which is above the melting point range of the polypropylene copolymer or mixture thereof but below the decomposition temperature range of the powdered rubber and at a mixing time which allows reaction of the free-radical former.

2. A method as claimed in claim 1, **characterized in that** at least a proportion of at least one polypropylene homopolymer is added during melting of the polypropylene copolymer.

3. A method as claimed in claim 2, **characterized in that** the thermoplastic used is a polypropylene blend comprising a mixture of copolymer and homopolymer and having a copolymer content of from 1 to 95% of the total polymer matrix.

4. A method as claimed in claims 1 and 2 or 3, **characterized in that** the free-radical donor used is a liquid peroxide having a high active oxygen content and a weight ratio to the polymer of > 0.3%.

5. A method as claimed in claim 1 and any of claims 2 to 4, **characterized in that** polyethylene is used as copolymer constituent.

6. A method as claimed in claim 1 and any of claims 2 to 5, **characterized in that** free-radical acceptors are added at a point in time dependent on the half-life of the free-radical donor so as to increase the hardness and strength of the compounds.

7. A method as claimed in claim 6, **characterized in that** sulfur, sulfur-containing or sulfur-donating substances and/or other polyfunctional compounds such as quinones or quinolines are added as free-radical acceptors before and/or during the melt-mixing process.

8. A method as claimed in claim 1 and any of claims 2 to 7, **characterized in that** substances having, in particular, a regenerative action on the powdered rubber are added prior to the addition of the free-radical donor-acceptor system.

9. A method as claimed in claim 8, **characterized in that** the substances having a regenerative action which are used are mercaptobenzothiazole (MBT) or pentachlorothiophenol or dibenzoylamidodiphenyl disulfite.

10. A method as claimed in claim 1 and any of claims 2 to 9, **characterized in that** the powdered rubber is used in various particle sizes, untreated or activated by mechanical and/or chemical and/or chemophysical methods, as rubber phase and formulation component.

11. A method as claimed in claim 10, **characterized in that** the powdered rubber has a particle size in the range up to 1 mm.

12. A method as claimed in claim 1 and any of claims 2 to 11, **characterized in that** further additives such as fillers, plasticizers, resins, fresh rubber and rubber mixtures or compatibilizers are added before or during the melt-mixing process.

13. A method as claimed in claim 1 and any of claims 2 to 12, **characterized in that** the polypropylene or the copolymer of polypropylene and polyethylene can be used either as pure primary or secondary polymer or in admixture with other thermoplastics or blend fractions.

## Revendications

1. Procédé de production d'un alliage élastomère similaire aux élastomères thermoplastiques en utilisant du caoutchouc usé et des déchets de caoutchouc, dans lequel le caoutchouc usé et les déchets de caoutchouc qui ont été transformés en une poudre de caoutchouc sont traités avec un thermoplaste et au moins un stabilisant en divers rapports massiques, dans un processus de mélangeage à l'état fondu dans une unité mélangeuse, pour donner lieu à des compounds, **caractérisé en ce qu'**au moins un copolymère de polypropylène ou un mélange de celui-ci avec au moins un type de polypropylène est d'abord fondu dans l'unité mélangeuse et de la poudre de caoutchouc, dont au moins une partie a été prégonflée dans un donneur de radicaux, est ensuite ajoutée en quantité mesurée à la masse fondue,
**en ce que** la poudre de caoutchouc est dispersée dans la matrice polymère en appliquant de fortes déformations à cisaillement et en ajoutant, de façon dépendante des paramètres de mélangeage, des agents formant des radicaux pour le couplage de phase entre la poudre de caoutchouc et le copolymère de polypropylène ou son mélange, et **en ce que** le processus de stabilisation dynamique est réalisé à une température du mélange qui est supérieure à la plage de température de fusion du copolymère de polypropylène ou de son mélange, mais toutefois inférieure à la plage de température de décomposition de la poudre de caoutchouc, et pour une période de mélangeage qui permet une réaction de l'agent formant des radicaux.

2. Procédé selon la revendication 1, **caractérisé en ce qu'**au moins une proportion d'au moins un homopolymère de polypropylène est ajoutée lors du processus de fusion du copolymère de polypropylène.

3. Procédé selon la revendication 2, **caractérisé en ce que** le thermoplaste est utilisé en tant que coupe de polypropylène, dans un mélange de copolymère et d'homopolymère et avec une proportion de copolymère de 1 à 95% de la totalité de la matrice polymère.

4. Procédé selon les revendications 1 et 2 ou 3, **caractérisé en ce que** le donneur de radicaux utilisé est un peroxyde liquide présentant une forte proportion d'oxygène actif et un rapport pondéral, par rapport à la fraction polymère, supérieur à 0,3%.

5. Procédé selon la revendication 1 et l'une quelconque des revendications 2 à 4, **caractérisé en ce que** le polyéthylène est utilisé en tant que constituant copolymère.

6. Procédé selon la revendication 1 et l'une quelconque des revendications 2 à 5, **caractérisé en ce que** des accepteurs de radicaux sont ajoutés à un moment dépendant de la demi-vie du donneur de radicaux en vue d'augmenter la dureté et la résistance des compounds.

7. Procédé selon la revendication 6, **caractérisé en ce que** du soufre, des substances soufrées ou donneuses de soufre et/ou d'autres composés polyfonctionnels tels que des quinones ou des quinoléines avant et/ou durant le processus de mélangeage à l'état fondu sont ajoutés en tant qu'accepteurs de radicaux.

8. Procédé selon la revendication 1 et l'une quelconque des revendications 2 à 7, **caractérisé en ce que** l'addition de substances présentant en particulier une action régénératrice sur la poudre de caoutchouc est réalisée avant l'addition du système donneur-accepteur de radicaux.

9. Procédé selon la revendication 8, **caractérisé en ce que** les substances à action régénératrice utilisées sont le mercaptobenzothiazole (MBT) ou le pentachlorothiophénol ou le disulfite de dibenzoylamidodiphényle.

10. Procédé selon la revendication 1 et l'une quelconque des revendications 2 à 9, **caractérisé en ce que** la poudre de caoutchouc est utilisée sous diverses granulométries, non traitée ou activée par des méthodes mécaniques et/ou chimiques et/ou chimico-physiques, en tant que phase de caoutchouc et composant de formulation.

11. Procédé selon la revendication 10, **caractérisé en ce que** la poudre de caoutchouc présente une granulométrie dans la plage allant jusqu'à 1 mm.

12. Procédé selon la revendication 1 et l'une quelconque des revendications 2 à 11, **caractérisé en ce que**, avant ou durant le processus de mélangeage à l'état fondu, d'autres additifs tels que des charges, des plastifiants, des résines, du caoutchouc frais et des mélanges de caoutchoucs ainsi que des agents compatibilisants sont utilisés.

13. Procédé selon la revendication 1 et l'une quelconque des revendications 2 à 12, **caractérisé en ce que** le polypropylène ou le copolymère de polypropylène et de polyéthylène peut être utilisé aussi bien sous forme de polymère primaire ou secondaire pur que sous forme de mélanges avec d'autres thermoplastes ou fractions mixtes.
